# EUROPEAN PATENT APPLICATION

(11) **EP 0 933 653 A2**
(43) Date of publication of application: **04.08.1999**
(21) Application number: 99102041.3
(22) Date of filing: 02.02.1999
(51) Int. Cl.: G01V 15/00

(54) **Apparatus for the safeguard and the remote detection of cables and works laid underground comprising a smart tape**

(30) Priority: 03.02.1998 IT RM980063
(71) Applicant: FIBOT HOLDING LTD., Valletta VLT 03 (MT)
(72) Inventor: Bernardini, Giuseppe, 00128 Roma (IT)
(74) Representative: Sarpi, Maurizio

(57) **Abstract**

A tape generally of plastic material to be laid underground above cables and works so as to identify the same by means of information regarding owner Body, type of cables and/or works, date of laying, installing firm, use, etc., such information being stored on installation and remote detected by means of a detection apparatus without the need of digging a hole and/or a cutting.

## Description

The present invention relates to the construction and maintenance of cables and works laid underground and forming the so-called subservices in the field of telecommunications and electric systems.
More particularly, the invention relates to an apparatus for the detection and the identification of cables and works laid underground which makes use of a special tape to be laid along with and above the cables laid underground directly into the excavations or within pipes or more generally infrastructures of subservices, the tape being able to be remote detected by a suitable detector without digging any hole.

As known, the so-called subservices form a network of utilities and infrastructures that crowd more and more the urban and extraurban subsoil.
Such a crowding reaches the maximum levels in the towns. This may imply that the works and/or subservices previously laid underground are often damaged during the excavation for the installation of a new system. In fact, the road owner Bodies have no cartographic documentation that exactly represents the map of the subsoil.
The outcoming material damage is considerable and often cannot be calculated as a whole. In addition to the direct cost of repair, there are also the so-called indirect cost concerning the inefficiency of the damaged installation and the so-called social cost harming all of the users driving across the roads with work under way. Indirect cost is particularly heavy when the damage is caused to telephone cables, especially optical fibre cables that have a high communication traffic. The interruption of the service and the consequent profit loss cause expenditures such as to thwart the installers' work.

The present invention seeks to provide a smart cable which is laid underground above any cable and/or subservice so as to avoid the problems of the traditional systems and to allow the cables and/or subservices to be detected and identified without the need of digging a hole and/or a cutting.
This is accomplished according to the invention by providing in combination:
- an identifying tape provided with a continuous row of electronic markers which can be programmed during the installation and interrogated after the tape has been laid underground;
- a programming apparatus capable of programming said markers on installation; and
- a detection apparatus capable of detecting said markers laid underground and to display the detected information;
   each marker being able to be supplied for its operation with induction power both from the programming apparatus and the detection apparatus.

In this way, each cable and/or subservice provided with and safeguarded by the tape according to the invention can be individually detected with all information stored therein along its whole length independent of the time from its installation.
At the end of the detection of the length in question, it is possible to mark off with stakes the surface of the road and to update, if necessary, the map of the same.
When the invention is used for high-voltage cables and gas pipelines, the aspect of tape which prevent accidents is certainly prevailing.
A first feature of the invention relates to the manufacture of the tape which is generally of insulating material bearing wordings and visual information along with the markers.
A second feature of the invention relates to the manufacturing of the identification tape in the form of a roll with suitable length.
A third feature of the invention relates to the manufacturing of the marker which consists of an electronic circuit capable of being supplied by inductive coupling even if it is deeply laid underground.
A fourth feature of the invention relates to the functions implemented by a marker, namely:
- programming a memory of the non-volatile type;
- reading the memory;
- data transmission.
A fifth feature of the invention relates to the construction of the marker detector which consists of an electronic circuit capable of detecting the marker laid underground at a certain depth.
A sixth feature of the invention relates to the functions of the marker detector which:
- supplies the power for feeding the marker by inductive coupling;
- generates an acoustic signal by a beeper whenever a marker is detected;
- displays the information detected.
A seventh feature of the invention relates to the functions implemented by the programming apparatus:
- programming the memory of the marker;
- transmiting and reading the stored data;
- supplying the marker with power by inductive coupling.
Additionally, the present invention relates also to a method of laying underground a cable and/or generally works comprising the following basic steps:
- digging the ground according to the regulations in force;
- laying the cable or the works according to the regulations in force;
- filling in the excavation partially according to the regulations in force;
- laying the detection tape having the above-mentioned features all over the longitudinal extension of the cables or works and on the vertical plane of symmetry of the cables or works;
- programming the markers of the tape by the programming apparatus which inputs information such as owner Body, type of cable and/or works, date of laying, installer firm, use, etc.;
- filling in the excavation fully and restoring the paving according to the regulations in force.

Further details and advantages of the present invention will be more readily apparent from the following description with reference to the accompanying drawings showing the preferred embodiment by way of a not limiting example and in which:

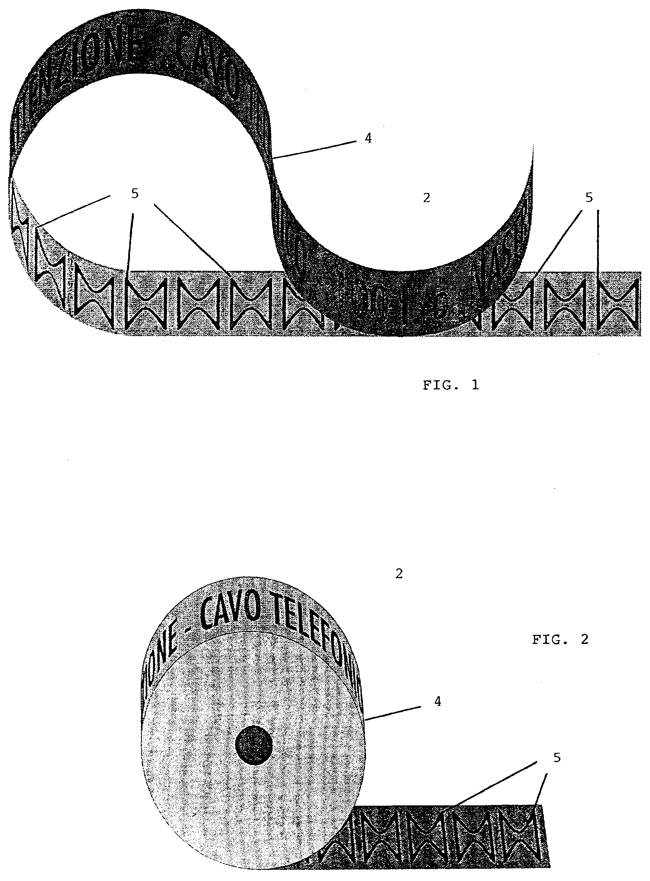

Fig. 1 shows a perspective view of the detection cable provided with identification wordings and the markers applied;
Fig. 2 shows the detection tape delivered as a roll having the suitable length for the installation;
Fig. 3 shows the laying section of a cable laid underground in which several installation means are illustrated;
Fig. 4 shows a block diagram of the electric circuit of the marker;
Fig. 5 shows a block diagram of the electric circuit of the programming apparatus;
Fig. 6 shows a block diagram of the electric circuit of the detection apparatus.

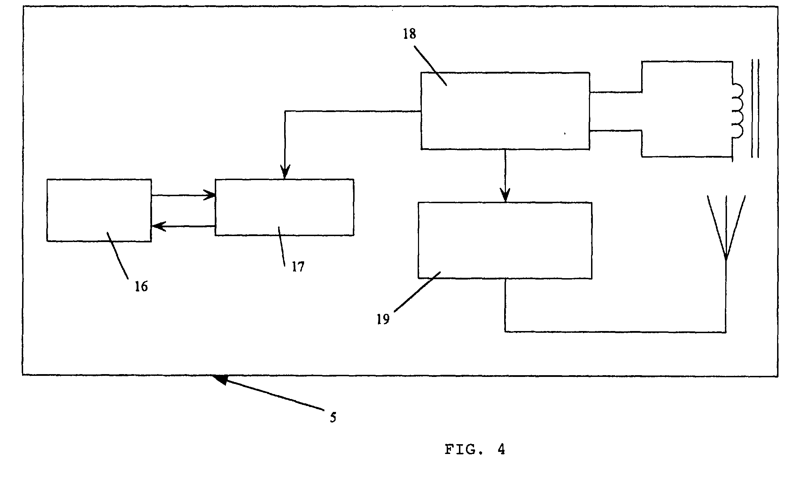

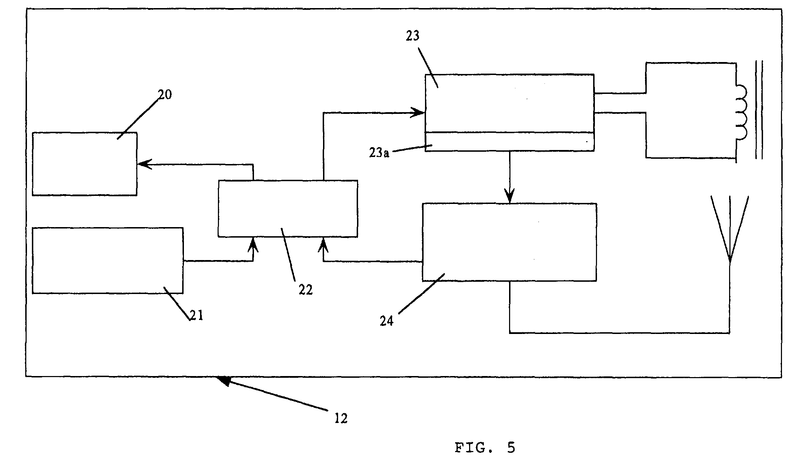

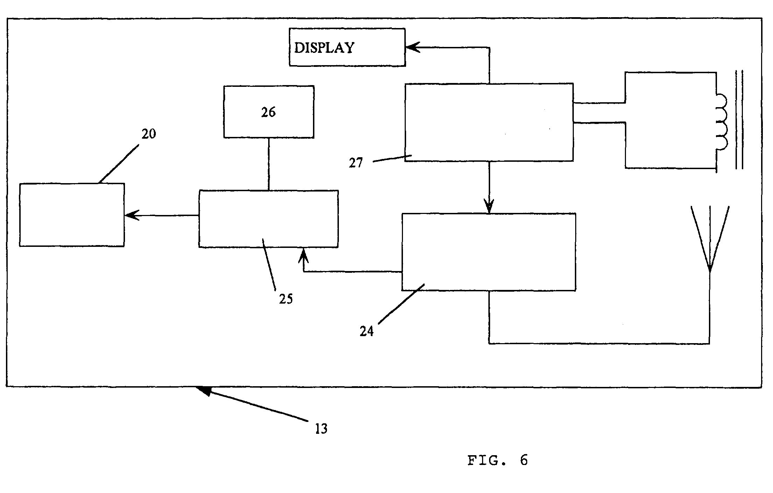

With reference to the figures, the detection tape according to the invention consists of a continuous tape 2 preferably of plastic material which is provided on one face with several identification wordings 4 and on the other face with a row of electronic markers 5. In a preferred embodiment such markers are formed by printed circuits located on small ferrite rectangles with a thickness of a few millimetres and a surface area of a few square centimetres which are stuck in succession to tape 2. Therefore, the tape may be delivered for its installation in the form of a roll with suitable length.
As can be seen in the block diagram of Fig. 4, each marker 5 consists of the following devices:
- a receiver of electromagnetic signals 18;
- a digital radio transmitter 19;
- an electrically programmable, non-volatile memory 16 containing identification data;
- a microprocessor 17 for processing the transmitted/received protocol data and storing information.
Each marker 5 is programmed during the installation by the programming apparatus 12 shown in Fig. 5. Such apparatus includes the following devices:
- a transmitter 23 of electromagnetic signals and a data transmission system 23a operating both at low frequency;
- a digital radio receiver 24;
- a microprocessor 22 for processing the transmitted/received protocol data;
- an alphanumeric display 20;
- a keyboard 21.
The detection and the identification of data stored in each marker laid underground at a certain depth are carried out by the detection apparatus 13 which consists of an electronic circuit, the block diagram of which is shown in Fig. 6.
The circuit devices of such detection apparatus are as follows:
- a transmitter 27 of electromagnetic low-frequency signals;
- a digital radio receiver 24;
- a microprocessor 25 for processing the received protocol data;
- an alphanumeric display 20;
- a beeper 26;
- a frequency self-correction device 29 provided with a display.
It should be noted that both transmitter 23 of programming apparatus 12 and transmitter 27 of detection apparatus 13 operate at low frequency. The use of a low frequency is due to the fact that it propagates also through a wet soil. By way of example, a frequency of 50 KHz is able to reach a depth in the order of one and half meter.

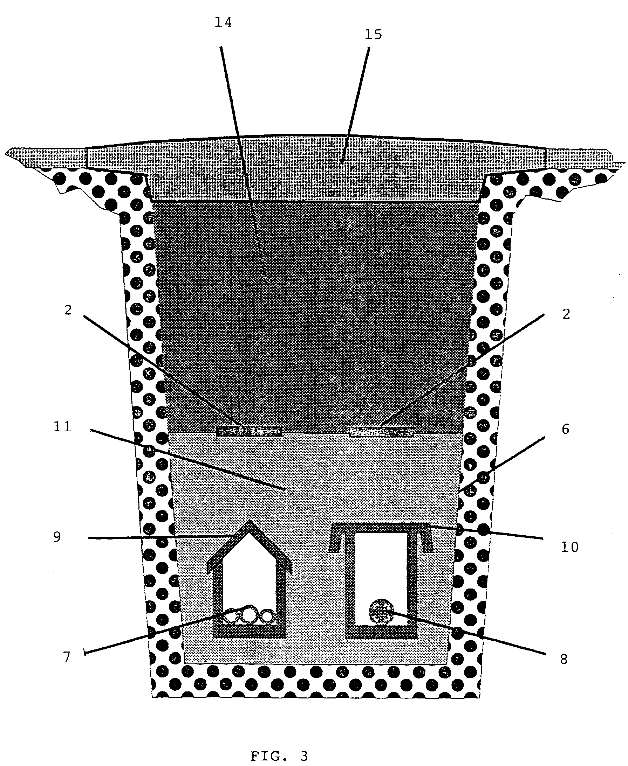

In Fig. 3 a typical installation plan of tape and cables is shown. Once cables 7, 8 are laid into cutting 6, they are provided with suitable mechanical protections 9, 10 and a partial embankment 11 is carried out, whereupon identification tapes 2 are laid underground on the vertical plane of symmetry of the underlying cables or works.
A second embankment 14 is carried out before paving the surface of the road 15.
The programming of the tape is carried out preferably before the second embankment.

A preferred embodiment of the invention has been described above, however, it should be understood that the applications of the invention are not limited to cables and/or subservices laid underground but can be also extended to those activities, e.g. building, in which it would be expedient to identify the type and the path of an underground cable.
It is self-evident that a number of changes and modifications can be made by those skilled in the art without departing from the scope of the present industrial invention as claimed in the appended claims.

## Claims

1. An apparatus for the detection of cables and/or works laid underground, characterized by the fact that it includes in combination:
- an identifying tape provided with a continuous row of electronic markers which can be programmed during the installation and interrogated after the tape has been laid underground;
- a programming apparatus capable of programming said markers on installation; and
- a detection apparatus capable of detecting said markers laid underground and to display the detected information.

2. The apparatus of claim 1, characterized in that in operation each marker is supplied with power by electromagnetic induction both when it is programmed and when it is detected from the programming apparatus and the detection apparatus, respectively.

3. The apparatus of the preceding claims, characterized in that the tape carrying the markers is also provided with identification wordings.

4. The apparatus of the preceding claims, characterized in that the thickness of the markers is such as to allow the identification tape to be manufactured in rolls with suitable length.

5. The apparatus of the preceding claims, characterized in that each marker consists of an electronic circuit capable of being supplied by inductive coupling even if it is deeply laid underground.

6. The apparatus of the preceding claims, characterized in that the following functions are implemented in each marker:
- programming a memory of the non-volatile type;
- reading said memory;
- data transmission.

7. The apparatus of the preceding claims, characterized in that the detection apparatus consists of an electronic circuit capable of detecting the markers laid underground at a certain depth.

8. The apparatus of the preceding claims, characterized in that the marker detection apparatus is provided with means that:
- supplies the power for feeding the marker by inductive coupling;
- generates an acoustic signal by a beeper whenever a marker is detected;
- displays the information detected.

9. The apparatus of the preceding claims, characterized in that the marker programming apparatus is provided with means capable of performing the following functions:
- programming the marker memory;
- transmitting and reading the stored data;
- supplying the marker with power by inductive coupling.

10. The apparatus of the preceding claims, characterized in that each marker (5) includes the following devices:
- a receiver of electromagnetic signals (18);
- a digital radio transmitter (19);
- an electrically programmable, non-volatile memory (16) containing identification data;
- a microprocessor (17) for processing the transmitted/received protocol data and storing information.

11. The apparatus of the preceding claims, characterized in that the programming apparatus (12) includes the following devices:
- a transmitter (23) of electromagnetic signals and a data transmission system (23a) operating both at low frequency;
- a digital radio receiver (24);
- a microprocessor (22) for processing the transmitted/received protocol data;
- an alphanumeric display (20);
- a keyboard (21).

12. The apparatus of the preceding claims, characterized in that the detection apparatus (13) includes the following devices:
- a transmitter (27) of electromagnetic signals;
- a digital radio receiver (24);
- a microprocessor (25) for processing the received protocol data;
- an alphanumeric display (20);
- a beeper (26);
- a frequency self-correction device (29) provided with a display.

13. The apparatus of the preceding claims, characterized in that both transmitter (23) of the programming apparatus and transmitter (27) of the detection apparatus operate at low frequency.

14. The apparatus of the preceding claims, characterized in that the frequency of the signals transmitted by the programming apparatus and/or the detection apparatus to each marker is about 50 KHz.
